# EUROPEAN PATENT SPECIFICATION

(11) **EP 1 059 393 B1**
(45) Date of publication and mention of the grant of the patent: **28.07.2004**
(21) Application number: 98905651.0
(22) Date of filing: 26.02.1998
(51) Int. Cl.: E04B 1/80, D04H 1/54, E04B 1/78

(54) **HEAT-INSULATING MATERIAL FOR HOUSES AND METHOD OF USING THE SAME**
WÄRMEISOLATIONSMATERIAL FÜR GEBÄUDE UND ANWENDUNG DESSSELBEN
ISOLANT THERMIQUE POUR MAISONS ET PROCEDE D'UTILISATION

(43) Date of publication of application: 13.12.2000
(73) Proprietor: Kanebo Limited, Sumida-ku, Tokyo 131-0031 (JP); Endeavorhouse Limited, Osaka-shi, Osaka 530-0042 (JP); Kanebo Gohsen, Ltd., Osaka-shi, Osaka 530-0001 (JP)
(72) Inventor: FUKUHARA, Toyotaka, Kobe-shi Hyogo 658-0000 (JP); HIGUCHI, Ryoichi, Koganei-shi Tokyo 184-0012 (JP); NAGATA, Makio, Hofu-shi Yamaguchi 747-0001 (JP)
(74) Representative: Behnisch, Werner, Dr.
(86) International application number: PCT/JP1998/000773
(87) International publication number: WO 1999/043903

(56) References cited:
- EP-A- 0 625 603
- DE-A- 4 409 329
- JP-A- 8 188 946
- JP-U- 2 017 327
- JP-Y2- 57 060 419

## Description

### TECHNICAL FIELD

The present invention relates to the use of a thermal insulating material for housing, the thermal insulating material including a fiber laminate body and is applicable irrespective of the type of construction, the wood frame construction or any conventional construction.

More particularly, the present invention relates to the use of a thermal insulating material for walls of housing, which is used over a long time period and has the following characteristics:
(1) There is little change in form with elapse of time, because of its structural properties;
(2) There is little decrease in thermal insulation ability with elapse of time, because of the little change in form;
(3) The compressive reaction force produced by the laminate structure causes the thermal insulating material to be contact bonded to the wall surface;
(4) The contact bonding to the wall surface well reduces the air gaps and prevents the moisture in the room from permeating.
(5) The less permeation of moisture ensures the desired thermal insulation ability;
(6) The thermal insulating material is readily cut in its laminating direction and thereby ensures the favorable field workability; and
(7) The polyester fiber material ensures the better recycling properties and the less dust, compared with the other thermal insulating materials.

### BACKGROUND ART

Products of inorganic fibers, such as glass wool and rock wool, are typically used as the thermal insulating materials for housing, regardless of the type of construction, the wood frame construction or any conventional construction. Such thermal insulating materials are generally manufactured in the form of glass wool or rock wool by centrifugation of molten glass or slug.

The thermal insulating materials for housing use in the form of glass wool or rock wool are applied as discussed below, with the view to attaining the high thermal insulation and the high sound insulation, so as to ensure the energy saving and protect the room from the noise outside the building. The glass wool or rock wool is inserted as the thermal insulating material locally into an interior-side section of the space defined by the exterior board element of the housing wall member arranged on the outer-most side and the interior board element of the housing wall member arranged on the interior side. This arrangement enables some space to remain between the exterior board element and the thermal insulating material. The interior side and the exterior side of the thermal insulating material may be covered with a moistureproof sheet, in order to prevent the wetting due to the permeation of moisture inside and outside the room.

The following problems, however, arise in the conventional technique. The glass wool and the rock wool are manufactured by the above-mentioned manufacturing method (that is, the manufacturing method without any processing to keep the own form), so that the form of the glass wool and the rock wool is not stably kept. Table 1 shows the results of a test in accordance with JIS K6401. These results clearly show that the rook wool does not have the sufficient form stability. After the repeated compression, the rock wool has the remaining strain of greater than 11% and does not return to its original form.

**Table 1**

| Results of test in accordance with JIS K6401 | | | |
|---|---|---|---|
| | Permanent Set after Repeated Compression Loading (repeating 50% compression 80 thousand times) | | |
| | Before Repeated Compression | After Repeated Compression | Ratio of Strain |
| Rock Wool 55 mm 0.040 g/cm³ | 59.9 mm | 53.1 mm | 11.4% |

The conventional technique localizes the glass wool or the rock wool in the interior-side section of the space defined in the housing wall member. Namely the thermal insulating material is not in contact with anything on the exterior side (especially with the exterior board element). It is accordingly not expected that the glass wool and the rock wool, which originally have poor form stability, keep the self-supporting state. One applicable method causes the circumferential ends of the glass wool or the rock wool to be held by pillars or posts. The glass wool and the rock wool can not, however, stand the self weight and the additional weight due to the moisture. This method accordingly does not solve the problem of changing the form with elapse of time.

In the structure that the thermal insulating material is localized on the interior side, for example, in the case where the room temperature is set to be higher than the atmospheric temperature by means of heating in winter or in the case where the room temperature is set to be lower than the atmospheric temperature by cooling in summer, moisture is condensed on the inner wall surface of the exterior board element, the inner wall surface of the interior board element, and the exterior-side surface of the thermal insulating material. The moisture condensation makes the inside the wall member undesirably wet, thereby deteriorating the performances of the thermal insulating material and causing the pillars and posts to be rotten. Addition of the moisture to the glass wool and the rock wool extremely worsens their form stability, and the glass wool and the rock wool can not function any longer as the thermal insulating materials.

The glass wool and the rock wool after demolition of houses can not be recycled and should be treated as industrial wastes. These are not favorable from the viewpoint of the environmental preservation.

A still another problem is the working atmosphere, that is, glass dust from inorganic fibers in the process of working the glass wool. The workers feel irritating stimuli due to the glass dust.

EP-A-0625603 discloses the use of a material which is a fiber aggregate prepared by blending polyester fibers (A) with (B) sheath-core type composite fibers, wherein said sheath component has a lower melting point than that of a core component, subjecting the laminate of card webs to heat treatment ,wherein said laminate body has a thickness of up to 1000 mm and a density of 0.02 to 0.1g/cm³; wherein the luminating direction of the fibers is along the direction of the thickness of the wall or perpendicular to the direction of the thickness of the wall; as shoulder pads, cushion material or for automobile seats.

### DISCLOSURE OF THE INVENTION

The present invention is directed to the use of a thermal insulating material having a mat-like shape made of a polyester fiber for walls of housing, said thermal insulating material comprising:
(1) a fiber laminate body, formed by laminating card webs that are provided by blending (A) a polyester fiber with (B) a sheath-core type composite fiber, wherein said sheath component has a lower melting point than that of the core component, subjecting the laminate of card webs to heat treatment, so that intersections of three-dimensionally continuous fibers are mutually fused to one another by means of the molten sheath component of the sheath-core type composite fiber, wherein the density of said laminate body is within a range from 0.02 to 0.1 g/cm³;
(2) said laminate body having a thickness of up to 1000 mm;
(3) wherein the laminating direction of the fibers is along the direction of the thickness of the wall or perpendicular to the direction of the thickness of the wall.

The fiber laminate body has density of 0.02 to 0.1 g/cm³ and can be cut in any direction of length, width, and height, the density varying within a range of ±5% in any direction of length, width, and height.

### BRIEF DESCRIPTION OF THE DRAWINGS

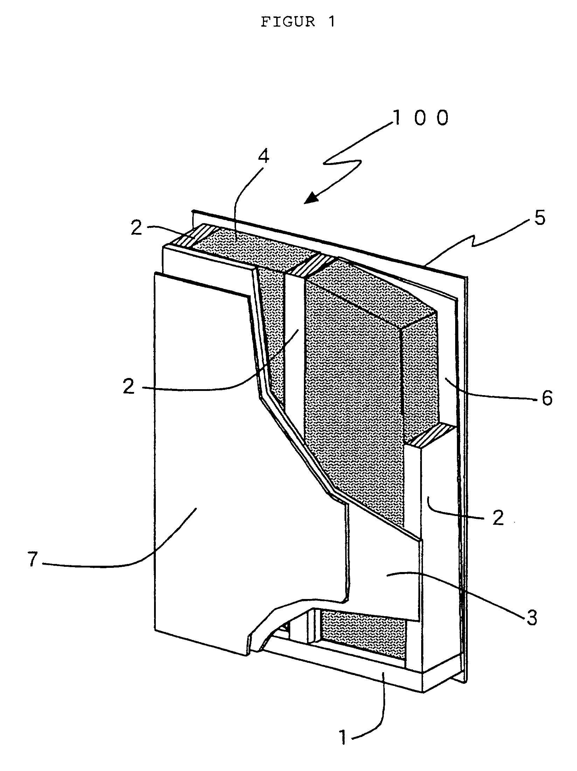

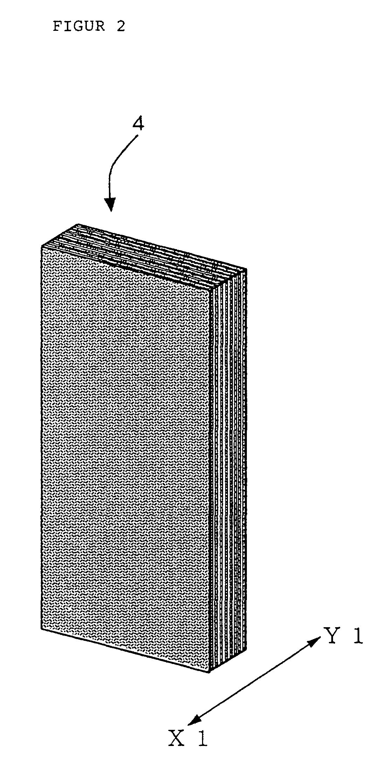

Fig. 1 shows an application of a thermal insulating material for housing use according to the present invention; and Figs. 2 through 4 show laminating directions of fibers in the use of the thermal insulating material for housing.

### BEST MODE FOR CARRYING OUT THE INVENTION

### (Description of Fiber Constituents)

The following describes the fibers constituting the fiber laminate body included in the thermal insulating material for housing use according to the present invention.

Any of known polyethylene terephthalate, polyhexamethylene terephthalate, polytetramethylene terephthalate, poly-1,4-dimethylcyclohexane terephthalate, polyhydrolactone, copolymerized esters thereof, and composite fibers thereof by conjugate spinning may be applied for the polyester fiber as the constituent (A) of the fiber laminate body. The side-by-side composite fiber including two different polymers of different heat shrinkage rates is preferable since it has the spiral crimp and holds a three-dimensional structure. Especially preferable is hollow yarn having the degree of hollowness of 5 to 30%. The polyester fiber desirably has the degree of fineness of 4 to 30 deniers and a cut length of 25 to 150 mm.

The sheath-core type composite fiber used as the constituent (B) may be any of composite fibers manufactured by combining a conventional polyester fiber as a core component with low melting-point polyester, polyolefin, or polyamide as a sheath component in such a manner that the core component and the sheath component have a difference in melting point of not less than 30°C. The composite fiber desirably has the degree of fineness of 2 to 20 deniers and a cut length of 25 to 76 mm. The low melting-point polyester is especially preferable for the sheath component of the constituent (B) sheath-core type composite fiber. The low melting-point polyester is a copolymerized ester containing any of aliphatic dicarboxylic acids, such as adipic acid and sebacic acid, aromatic dicarboxylic acids, such as phthalic acid, isophthalic acid, naphthalenedicarboxylic acid, and/or alicyclic dicarboxylic acids, such as hexahydroterephthalic acid and hexahydroisophthalic acid, and any of aliphatic groups and alicyclic diols, such as diethylene glycol, polyethylene glycol, propylene glycol, and p-xylylene glycol with any of oxyacids, such as p-hydroxybenzoic acid, added according to the requirement. For example, the low-melting point polyester is prepared by copolymerizing terephthalic acid and ethylene glycol with isophthalic acid and 1,6-hexanediol added.

In the fiber laminate body included in the thermal insulating material for housing use according to the present invention, it is preferable that the fiber (A) and the fiber (B) are blended at a weight ratio of 95 through 40 to 5 through 60.

As described previously, the hollow yarn is preferably used as the main polyester fiber constituent. The hollow yarn causes the fibers in the web to be tangled in an irregular manner and is fused to and joined with the low melting-point component of the sheath-core type composite fiber at the intersections to form a three-dimensional structure. This gives a product having an extremely small strain by the repeated compressive loading.

The following describes the thermal insulating material used for walls of housing including one of the fiber laminate body, and the cutting fiber laminate body, which are composed of the fibers discussed above. The description regards the wood frame construction, but the technique of the present invention is not restricted to such construction. The thermal insulating material used according to the present invention has a mat-like shape and is used for the thermal insulating material of housing wall. One embodiment of the thermal insulating material for housing use is discussed below, but the present invention is not limited to this embodiment .

Fig. 1 shows an application of the thermal insulating material for housing. As shown in Fig. 1, a wall panel (100) for housing use with the thermal insulating material of the present invention includes a framework having horizontal frames (1) and vertical frames (2) that are assembled in a rectangular shape, an exterior board element (3) arranged on the exterior side of the framework, an interior board element (5) arranged on the interior side of the framework, a thermal insulating material (4) that is inserted in the inner space of the framework and includes the fiber structural body, a moistureproof sheet (6) applied between the interior board element (5) and the thermal insulating material (4), and an outer-most member (7).

The unit member of the framework is a rectangular timber that is made of wood or bonded wood according to standards of various framework materials and has a cross section, which is perpendicular to its longitudinal direction, of appropriately specified dimensions like 2x4 inches or 2x6 inches. The thickness of the thermal insulating material (4) is determined according to the dimensions of the rectangular timber. The vertical frames (2) in the panel (100) are arranged generally at center-to-center intervals of 455 mm. The interval may be varied according to the structural requirements. The horizontal frames (1) include upper frames , in addition to the lower frames illustrated.

The exterior board element (3) may be a structural plywood having a thickness of 7 to 12 mm. The interior board element (5) may be a plasterboard having a thickness of 9 to 15 mm.

The apparent thickness here is about 90 mm, which is coincident with the width of the framework (that is, the thickness of either the horizontal frames (1) or the vertical frames (2)). The thermal insulating material (4) is inserted into the framework to be in close contact with the moistureproof sheet (6) and with the rear surface of the exterior board element (3). Namely the space defined in the wall of the framework material is completely filled with the thermal insulating material (4).

The fiber laminate body included in the thermal insulating material used in the present invention is manufactured according to the following procedure. The procedure laminates card webs that are provided by blending (A) a polyester fiber with (B) a sheath-core type composite fiber, where a sheath component has a lower melting point than that of a core component, and causes the laminate of card webs to be subjected to heat treatment, so that intersections of three-dimensionally continuous fibers are mutually fused to one another by means of the molten sheath component of the sheath-core type composite fiber. For the purpose of the heat treatment, the laminate is kept between a pair of horizontal plates under compression, placed in a steam pot, and is exposed to a stream of steam. It is here preferable that the laminate is kept upright or turned during the heat treatment, in order to apply the self weight in a direction different from the laminating direction.

The manufacturing method is discussed more in detail. The method tentatively fuses the surface of low-meshed card webs, which are obtained by blending the fiber (A) with the fiber (B), by means of far infrared rays or a hot-air heater, and laminates the card webs to have predetermined density and thickness. The laminate is kept in a pair of plates having good thermal conductivity, such as metal plates, under compression and is subjected to heat treatment in a steam pot in an upright state (that is, the state where the thickness of the laminated card webs is set in the vertical direction). The laminate is then rotated 90 degrees while being kept under compression. This ensures the heat treatment free from the effects of the loading in the direction of the thickness of the laminate. This technique effectively prevents the downward shift of the fibers due to the self weight from being depressed by the repulsion force of the fibers in the horizontal direction. For the purpose of the heat treatment, the steam pot is evacuated to a pressure down to 750 mmHg and the laminate is exposed to a stream of steam of not less than 1 kg/cm². It is preferable that the plates used for keeping the laminate under compression are porous.

The heat treatment carried out in the above manner keeps the repulsion stress applied in the horizontal direction and thereby causes the fiber laminate body of a desired density to be obtained, irrespective of the thickness of the fiber laminate body. In the case of a fixed mesh of the web, the greater thickness of the web (lower density) gives a product of lower density. The less thickness of the web (higher density) gives a product of higher density. This technique efficiently gives even a thick fiber laminate body of 1000 mm in thickness, which includes the fibers homogeneously fused even in the inner layer and has the fine hand and excellent appearance. The technique of the present invention readily manufactures the product of a desired density, whose variation ranges within ±5%. The technique of the present invention also enables the fiber laminate body having a hardness of not less than 10 g/cm² to be stably manufactured.

In the process of manufacturing the fiber laminate body included in the thermal insulating material used for housing according to the present invention, the heat treatment may be carried out while the fiber laminate body is being rotated, so as to prevent the self weight from being localized in one direction.

The fiber laminate body thus manufactured is used as the thermal insulating material for housing use.

The fiber laminate body can be cut in any direction, the length, the width, or the height. Setting the orientation of the fiber laminate body gives the thermal insulating material of the present invention has unexpected properties and different properties from those of the conventional thermal insulating materials.

Setting the fiber laminating direction along the thickness of wall (that is, the direction shown by the arrow X1 to Y1 in Fig. 2) enables the contact bonding to the moistureproof sheet (6) to be enhanced by the compressive reaction force of the laminate body in the laminating direction. This arrangement effectively prevents the moisture in the room from permeating and thereby keeps the desired thermal insulation ability, as discussed previously in the case of the fiber structural body.

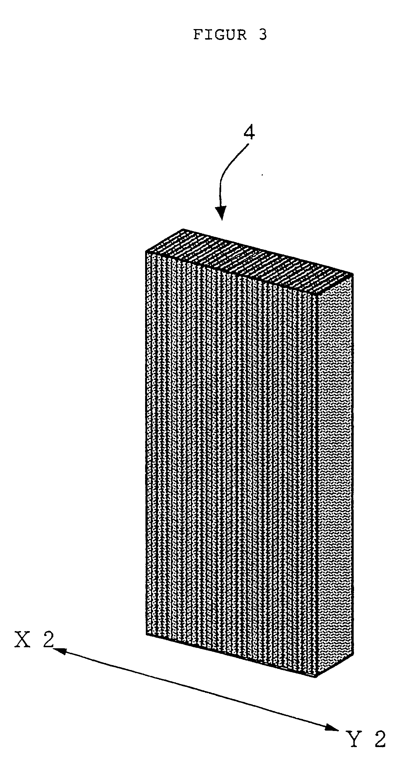

Setting the fiber laminating direction perpendicular to the thickness of wall as shown in Fig. 3 (that is, the direction shown by the arrow X2 to Y2 in Fig. 3) causes the laminated body to be readily torn along its length. The fiber laminate body is not readily torn in the tangled direction of the fiber webs but is readily peeled off in the laminating direction. The arrangement that takes advantage of the structural properties of the fiber laminate body and ensures the easy tearing along the length of the wall surface improves the field workability. This is preferably applied in the case where the space in the wall member is completely filled with the thermal insulating material without any clearances. There are a diversity of pipes, such as water pipes (P) in the wall member. The thermal insulating material (4) including the fiber laminate body of this arrangement can be readily (manually in practice) torn along the length. This arrangement enables the space in the wall member to be completely filled with the thermal insulating material (4) appropriately cut at the piping positions.

The fiber laminate body may have a thickness of even 1000 mm, whereas the vertical frames (2) included in the panel (100) are generally arranged at the center-to-center intervals of 455 mm. The required thickness of the fiber laminating body in the direction of the arrow X2 to Y2 shown in Fig. 3 is about 400 mm at the maximum. This is much less than 1000 mm. Such application accordingly does not require a plurality of fiber laminate bodies to be laid one upon another.

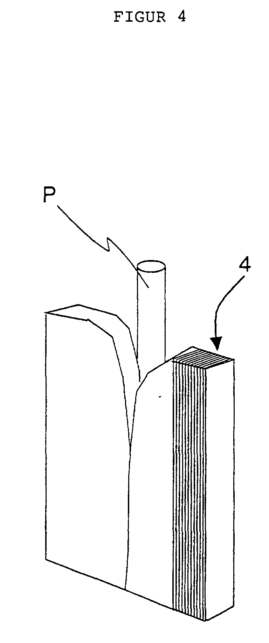

When the fiber laminate body is arranged to be readily torn in the longitudinal direction of wall for the better field workability as shown in Fig. 4 and is appropriately cut and used as the thermal insulating material for housing, the reaction force occurs in the direction of the thickness of wall due to the rigidity of the fibers. This enhances the contact bonding to the moistureproof sheet (6), effectively prevents the moisture in the room from permeating, and keeps the desired thermal insulation ability. The reaction force occurring in this case is not due to the compression of the laminated card webs but due to the rigidity of the fibers.

As described above, the thermal insulating material used for housing according to the present invention can be cut in any direction, the length, the width, or the height, irrespective of the orientation of the fiber laminate body. The cutting direction is thus set by taking into account the prevention of set and the readily tearing direction. This arrangement exerts the extremely favorable effects from both the viewpoints of the form stability and the field workability.

Like the fiber structural body discussed above, the fiber laminate body has the advantages: (1) there are no significant variation in strength by heat fusion with elapse of time to cause permanent set and no significant variation in thermal insulation ability with elapse of time; (2) the fibers even in the inner layer are homogeneously fused, which results in a substantially homogeneous density distribution to attain uniform thermal insulation ability; and (3) the polyester fiber material used as the main constituent of the fiber laminate body ensures the excellent recycling properties, causes any dust in the process of working so as to attain the extremely favorable field workability, and causes no toxic gases in the process of incineration so as to ensure the improved environmental protection properties.

### (Addition of Third Component)

Another fiber may be further blended as a third component. At least part of the fibers used in the present invention may be water-absorbing fibers, antibacterial polyester fibers containing an antibacterial agent, such as antibacterial zeolite, or fire retardant polyester fibers.

Addition of an antibacterial agent to the sheath component of (B) the sheath-core type composite fiber is especially effective, since the antibacterial agent is spread over all the fibers simultaneously with melting the sheath component by heat treatment.

### (EXAMPLES)

The following Examples further illustrate thermal insulating materials of the present invention. Two different fiber laminate bodies were manufactured by laminating card webs with specification densities of 0.020 g/cm³ and 0.025 g/cm³. The card webs were obtained by blending 82% of (A) the polyester fiber having the degree of fineness of 13 denier and the cut length of 51 mm with 18% of (B) the sheath-core type composite fiber, which has the degree of fineness of 3 denier and the cut length of 51 mm and includes the sheath component having the lower melting point than that of the core component.

Table 2 shows the comparison between the thermal insulating materials including these two different fiber laminate bodies and the rock wool as the conventional thermal insulating material.

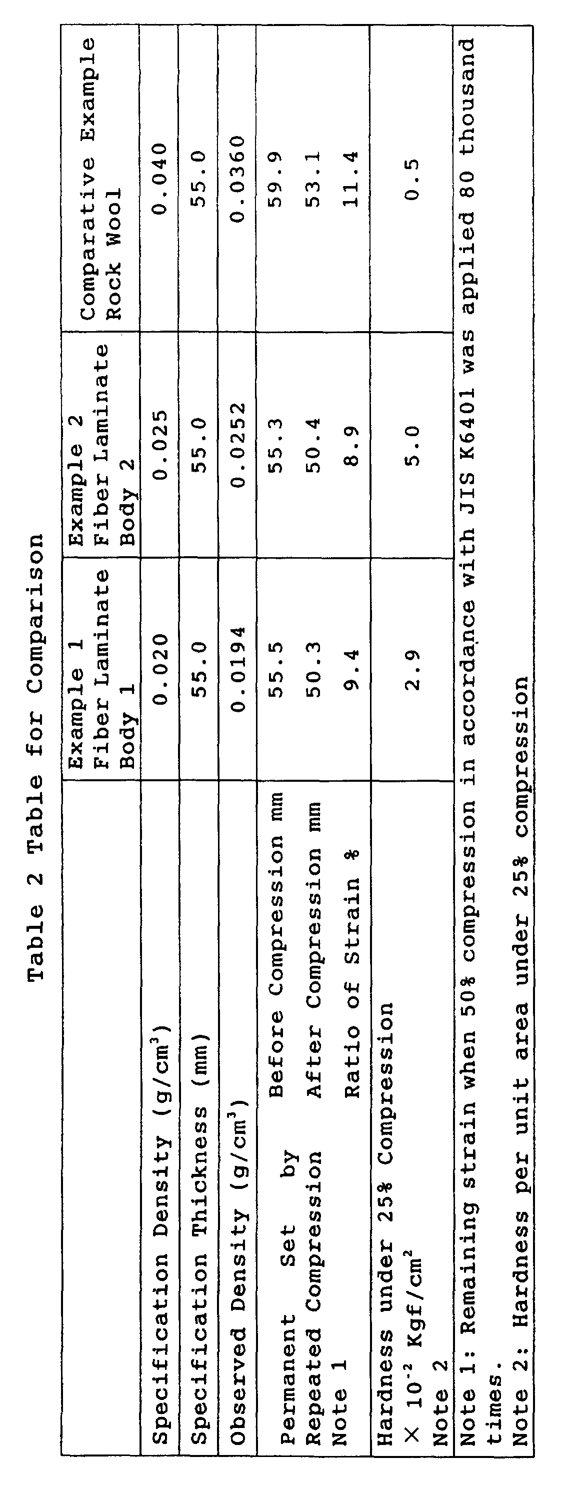

The permanent set is expressed by the residual strain after the repeated compression shown in Table 2. Application of the repeated loading simulated the variation with elapse of time. Whereas the rock wool had a relatively large permanent set of 11.4%, the thermal insulating materials of Examples 1 and 2 respectively had the smaller permanent sets of 9.4% and 8.9%. The hardness of the rock wool under 25% compression was only 0.5 × 10⁻² kgf/cm², whereas the thermal insulating materials of Examples 1 and 2 respectively had the hardness of 2. 9 × 10⁻² kgf/cm² and 5.0 × 10⁻² kgf/cm². This means that the rock wool under 25% compression has the low hardness of 0.5 × 10⁻² kgf/cm² per unit area, which hardly causes repulsion. The thermal insulating material of the present invention, on the other hand, has the reaction force of sixth to ten times. The reaction force presses the thermal insulating material against the wall member and thus attains the well contact bonding. The little variation with elapse of time enables the thermal insulating material to keep the desired thermal insulation ability over a long time period.

### INDUSTRIAL APPLICABILITY

As described above, the thermal insulating material used for housing according to the present invention, which includes the fiber laminate body, has little change in form with elapse of time and no significant set, thereby having little variation in thermal insulation ability with elapse of time and keeping a desired thermal insulation ability over a long time period. The polyester fiber material is suitable for recycling and does not cause any dust. The thermal insulating material used in the present invention accordingly has significant contribution to the improved environmental protection and working atmosphere and is widely applicable in the construction-related fields.

## Claims

1. Use of a thermal insulating material having a mat-like shape for walls of housing, the thermal insulating material having the following features:
a fiber laminate body, formed by laminating card webs that are provided by blending a polyester fiber with a sheath-core type composite fiber, wherein said sheath component has a lower melting point than that of the core component, subjecting the laminate of card webs to heat treatment, so that intersections of three-dimensionally continuous fibers are mutually fused to one another by means of the molten sheath component of the sheath-core type composite fiber, wherein the density of said laminate body is within a range from 0.02 to 0.1 g/cm³,
said laminate body having a thickness of up to 1000 mm;
wherein the laminating direction of the fibers is along the direction of the thickness of the wall or perpendicular to the direction of the thickness of the wall.

## Patentansprüche

1. Verwendung eines Wärmeisoliermaterials mit einer mattenartigen Form für Gebäude, wobei das Wärmeisoliermaterial die folgenden Merkmale aufweist:
einen Faserlaminatkörper, der durch Laminieren von Faservlies gebildet wird, das durch Mischen von einer Polyesterfaser mit einer Verbundfaser vom Mantel-Kerntyp, wobei der Mantelbestandteil einen niedrigeren Schmelzpunkt als der Kernbestandteil aufweist, durch Unterwerfen des Laminats aus Faservlies einer Hitzebehandlung, so dass die Schnittpunkte der dreidimensionalen kontinuierlichen Fasern wechselseitig mittels des geschmolzenen Mantelbestandteils der Verbundfaser vom Mantel-Kerntyp miteinander verschmolzen werden, bereitgestellt wird, wobei die Dichte des Laminatkörpers in einem Bereich von 0,02 bis 0,1 g/cm³ liegt,
der Laminatkörper eine Dicke von bis zu 1000 mm aufweist;
wobei die Laminierrichtung der Fasern entlang der Richtung der Wanddicke oder senkrecht zur Richtung der Wanddicke ist.

## Revendications

1. Utilisation d'un matériau d'isolation thermique ayant la forme d'un matelas de fibres et étant destiné aux murs d'une habitation, le matériau d'isolation thermique ayant les caractéristiques suivantes :
un corps stratifié de fibres, formé par la stratification de nappes formant plaques, qui sont constituées en mélangeant une fibre de polyester avec une fibre composite du type à gaine et à coeur, dans laquelle ledit composant formant la gaine a un point de fusion inférieur à celui du composant formant coeur, en soumettant la stratification des nappes formant plaques à un traitement thermique, de telle sorte que des intersections de fibres continues de manière tridimensionnelle soient mutuellement assemblées par fusion au moyen du composant fondu formant gaine de la fibre composite du type à gaine et à coeur, et dans lequel la densité dudit corps stratifié est comprise dans une plage de 0,02 à 0,1 g/cm³,
ledit corps stratifié ayant une épaisseur pouvant aller jusqu'à 1000 mm ;
dans lequel le sens de stratification des fibres s'étend dans le sens de l'épaisseur du mur ou perpendiculairement au sens de l'épaisseur du mur.
